# EUROPÄISCHE PATENTSCHRIFT

(11) **EP 0 658 497 B1**
(45) Veröffentlichungstag und Bekanntmachung des Hinweises auf die Patenterteilung: **20.05.1998**
(21) Anmeldenummer: 94119267.6
(22) Anmeldetag: 07.12.1994
(51) Int. Cl.: B65G 15/58, B65G 47/91, B65H 3/08

(54) **Mit Saugluft arbeitende Vorrichtung zum hängenden Transport von Blechen**
Vacuum device for transporting suspended plates
Dispositif de transport à aspiration pour plaques suspendues

(30) Priorität: 15.12.1993 DE 4342753
(43) Veröffentlichungstag der Anmeldung: 21.06.1995
(73) Patentinhaber: SCHULER PRESSEN GmbH & Co., 73033 Göppingen (DE)
(72) Erfinder: Trautwein, Hans-Jürgen, D-73035 Göppingen (DE)

(56) Entgegenhaltungen:
- DD-A- 300 969
- DE-A- 2 165 271
- DE-A- 4 202 379
- DE-B- 2 123 870
- US-A- 3 215 269

## Beschreibung

Die Erfindung betrifft eine Vorrichtung zum Transport von Blechen der im Oberbegriff von Anspruch 1 angegebenen Art.

Bleche, Platinen und derartige flächige Güter sind über eine vorherbestimmbare Transportstrecke in hängender Weise aus zum Beispiel einer Entnahmestation in eine Ablegestation zu bewegen. Die Ablegestation kann hierbei die Zentrierstation einer Presse, der Auflagebereich eines weiteren Fördermittels oder einer Abwurfposition für auszusondernde Doppelplatinen sein.

Aus der DD-A-300 969 ist eine Entstapel- und Transportvorrichtung für Platinen bekannt mit einem Hängeförderer, der aus im Abstand zueinander geführten und mit Magneten hinterlegten Transportbändern besteht. An einer Übergabestation ist ein Auflageförderer vorgesehen mit zwei magnethinterlegten Transportbändern, deren Auflagenweite einstellbar ist. Nichtmagnetische bzw. nichtmetallische Güter, wie beispielsweise Alubleche, können mit dem Hängeförderer nicht transportiert werden.

Aus der DE-B-21 23 870 ist eine Vorrichtung zum hängenden Transport von Blechen und Platinen bekannt mit endlosen Fördermitteln, an denen Saugmittel zum Halten bei Transport angebracht sind. Durch die Saugmittel ist ein die Oberfläche der Bleche und Tafeln schonender Transport möglich.

Aufgabe der Erfindung ist die Schaffung einer Vorrichtung zum hängenden Transport auch von nicht magnetisierbaren Gütern mit auf die Größe der Güter und die Bewegungsrichtung dieser einstellbarem Hängeförderer.

Die Aufgabe ist gelöst bei einer Vorrichtung nach dem Stand der Technik durch die kennzeichnenden Merkmale des Anspruchs 1. Die Merkmale der weiteren Ansprüche beinhalten bevorzugte Ausgestaltungen nach der Erfindung.

Anhand eines in der Zeichnung dargestellten Ausführungsbeispiels wird im folgenden die Erfindung näher erläutert.

Dabei zeigen:

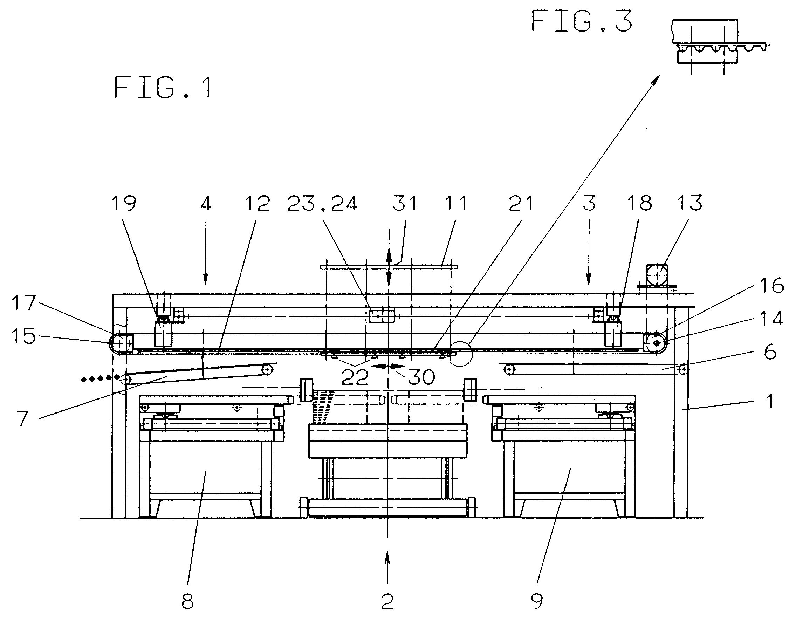

- Fig. 1: eine Transportvorrichtung nach der Erfindung im Einsatzbereich einer Entstapelstation für Bleche,
- Fig. 2: die Draufsicht auf die Tranportvorrichtung nach Fig. 1,
- Fig. 3: eine vergrößerte Einzelheit der Verbindungsstelle von Transportband / Zahnriemen und schlittenartigem Teil und
- Fig. 4: eine Schnittdarstellung gemäß dem Schnittverlauf IV - IV in Fig. 2.

In den Figuren sind gleiche Teile gleich positioniert. Das Gestell 1 besteht aus einem Tragrahmen für die Mittel zum hängenden Transport von Blechen 26, 27 in den horizontalen Richtungen des gezeigten Doppelpfeiles 30. Mit 2 ist eine Entstapelstation für Bleche vom Stapel positioniert, in der eine Saugerbrücke 11 in den vertikalen Richtungen des Doppelpfeiles 31 bewegbar ist zum Abheben von vereinzelten Blechen vom Stapel und Anheben bis auf Transporthöhe.

Zum Transport der Bleche dient ein Hängeförderer mit Transportbändern 12, und insbesondere mit Zahnriemen, von denen mehrere parallel zueinander und quer zur Transportrichtung hintereinanderliegend auf Transport- bzw. Umlenkrollen 16, 17 gelagert sind. Die Transportrollen 16 sind auf Profilwellen 14, in deren Achsrichtung verschiebbar gelagert. Die Transportrollen 17 sind in Rechteckprofilen 28 auf Spindeln 32, 33 beweglich. Der Drehantrieb für die Profilwelle 14 erfolgt vom Antriebsmotor 13 aus über Getriebe oder direkt auf die Profilwelle 14. Der Abstand der Transportbänder 12 bzw. Zahnriemen zueinander ist auf die Größe der zu bewegenden Bleche 26, 27 und auf den parallelen Transport von zwei Blechen einstellbar. Hierzu dienen ein Antriebsmotor 23, 24 je vorderer und hinterer Vorrichtungshälfte und Bewegungsmittel 18, 19 wie Umlenkgetriebe, Verbindungsgestänge und Spindeln 32, 33. Die Spindeln 32, 33 erstrekken sich in Verstellrichtung der Transportbänder 12. Sowohl Motor 13 für die Transportbewegung der Transportbänder 12, als auch die Motoren 23, 24 für die Drehbewegung der Spindeln 32, 33 zum Einstellen auf die Blechgröße sind in ihren Drehbewegungen umkehrbar - reversibel - .

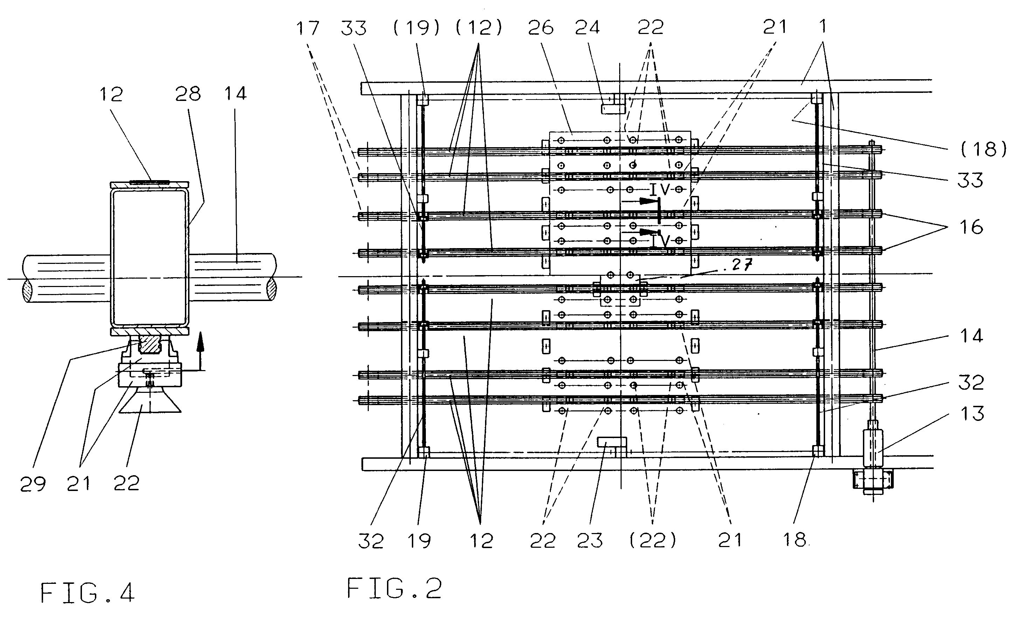

Die Transportbänder 12 bzw. Zahnriemen sind an Saugerschlitten bzw. schlittenartigen starren Teilen 21 angeschlossen, wie es Fig. 3 erkennen läßt. Fig. 4 zeigt Einzelheiten des schlittenartigen Aufbaus mit dem eigentlichen Saugerschlitten 21, der in Führungen 29 in Transportrichtung bewegbar gelagert ist und einem Rechteckprofil 28 als Träger für die Saugerschlitten 21 und die Transportrollen 17. Der Transport- / bzw. Zahnriemen 12 ist oberhalb des Rechteckprofils 28 geführt. Das Rechteckprofil 28 jedes Transport- / bzw. Zahnriemens 12 ist an einer Profilwelle 14, über entsprechende Profilierungen im Endteil jeder Trägerseite beweglich.

Die sich quer zur Transportrichtung erstreckenden und über die Getriebe 18, 19 drehbeweglichen Spindeln 32, 33 sind über Muttern bzw. Schloßmuttern an den Rechteckprofilen 28 angeschlossen für eine Verstellbarkeit dieser quer zur Transportrichtung und untereinander. Hierzu können Spindeln mit Links - Rechtsgewinde oder mit unterschiedlicher Steigung versehen sein. Mit 22 sind Saugermittel an den schlittenartigen starren Teilen 21 positioniert, die mit gesteuertem Unterdruck zu versorgen sind.

Mit dem Abheben der Bleche 26, 27 vom Stapel in der Entstapelstation 2 wird die Doppelplatinenkontrolle durchgeführt. Doppelplatinen sind von dem Saugerschlitten 21 bei entsprechender Ansteuerung des Motors 13 und der Sauger 22 auf einem Schwerkraft-bzw. Auflageförderer 7 in der Doppelplatinenablegestation 4, Einzel-Bleche auf einem Schwerkraft- bzw. Auflageförderer 6 in der Ablegestation 3 für den Weitertransport abzuwerfen. Die Positionen 8 und 9 kennzeichnen Platinenwechseleinrichtungen für den fortwährenden Transport von Blechen 26, 27 zu dem Auflageförderer 6 und weiter zu einer die Bleche 26, 27 bearbeitenden bzw. behandelnden Stufe.

## Patentansprüche

1. Mit Saugluft arbeitende Vorrichtung zum hangenden Transport von Blechen, Platinen und derartiger flächiger Güter über eine voreinstellbare Transportstrecke, **dadurch gekennzeichnet,** daß auf Transport- bzw. Umlenkrollen (16, 17) gelagerte, die Transportstrecke überspannende Transportbänder (12) quer zur Transportstrecke nebeneinander und parallel zueinander angeordnet sind, die über gemeinsame Antriebs- und Bewegungsmittel (13, 14, 16, 17) treibbar sind, deren Bewegungsantrieb (Motor 13) reversibel ist für eine hin- und hergehende Bewegung der Transportbänder (12) und die in dem die Bleche (26, 27) erfassenden Bereich jeweils einen Saugermittel (22) aufweisenden, gestellgeführten schlittenartigen starren Teil (21) aufweisen bzw. an einen solchen angeschlossen sind, wobei der Abstand der Transportbänder (12) zueinander einzeln oder insgesamt gemeinsam auf die Blechgröße einstellbar ist.

2. Vorrichtung nach Anspruch 1, **dadurch gekennzeichnet,** daß die Transportbänder (12) Zahnriemen sind.

## Claims

1. Vacuum-operated apparatus for the suspended transport of metal sheets, sheet bars and sheet-like articles of this type over a presettable transport zone, characterized in that transport bands (12) mounted on transport or deflecting rollers (16, 17) and spanning the transport zone are arranged next to and parallel to one another transversely relative to the transport zone and can be driven via common drive and movement means (13, 14, 16, 17), the movement drive (motor 13) of which is reversible for a to-and-fro movement of the transport bands (12) and which in each case, in the region gripping the metal sheets (26, 27), have or are connected to a frame-guided slide-like rigid part (21) having a sucker means (22), the distance between the transport bands (12) being individually or altogether jointly adjustable to the metal sheet size.

2. Apparatus according to Claim 1, characterized in that the transport bands (12) are toothed belts.

## Revendications

1. Dispositif à aspiration d'air pour le transport suspendu de tôles, platines et matériaux plats similaires sur un trajet de transport pré-réglable, **caractérisé en ce que** des bandes transporteuses (12) montées sur des galets de transport, respectivement des poules de renvoi (16, 17) passant au dessus du trajet du transport sont disposées transversalement au trajet de transport côte à côte et parallèles l'une par rapport à l'autre, ces bandes transporteuses pouvant être actionnées par des organes moteurs communs (13, 14, 16, 17), dont l'entraînement (moteur 13) est réversible pour un mouvement de va-et-vient des bandes transporteuses (12) et qui, dans la zone saisissant les tôles (26, 27), présentent une partie rigide (21) du type de chariot guidé sur bâti comportant un moyen aspirant (22), respectivement qui sont reliées à un tel élément, la distance des bandes transporteuses (12) entre elles étant réglable individuellement ou pour toutes ensemble selon les dimensions de la tôle.

2. Dispositif selon revendication 1, **caractérisé en ce que** les bandes transporteuses (12) sont des courroies dentées.
